# EUROPEAN PATENT APPLICATION

(11) **EP 4 663 015 A1**
(43) Date of publication of application: **17.12.2025**
(21) Application number: 24182156.0
(22) Date of filing: 14.06.2024
(51) Int. Cl.: A01M 1/02

(54) **A SMART INSECT TRAP AND A METHOD FOR USING SUCH A SMART INSECT TRAP**

(71) Applicant: Strygoo BV, 2440 Geel (BE); Vlaams Bijeninstituut VZW, 2560 Nijlen (BE)
(72) Inventor: Wenmakers, Dirk, 3560 Dilsen Stokkem (BE); De Backer, René, 2560 Nijlen (BE); Caers, Philippe, 2440 Geel (BE)
(74) Representative: De Clercq & Partners

(57) **Abstract**

There is described an insect trap (1) for trapping and selectively killing or releasing insects. The insect trap comprising a selective killing mechanism (40). The selective killing mechanism (40) comprising a moveable element (45) moveably placed inside an enclosure (41). The selective killing mechanism (40) further comprising a shredding device (48) positioned at least partly inside the enclosure (41), the shredding device (48) being configured to cooperate with the moveable element (45) to selectively kill an insect located inside the containment space (46) based on the identification by the identification means (30).

## Description

### Field of the invention

The invention relates to the field of effectively controlling pest populations by luring, selectively trapping, identifying and killing or releasing specific insects based on their type. More specifically, the invention relates to a smart insect trap which is designed to capture harmful insects such as Asian Hornets, determines if a trapped insect is the specific insect which needs to be killed and then effectively eliminates the insect if it is the targeted insect, while releasing non-targeted insect unharmed. The invention is further related to a method for using the smart insect trap to effectively control the pest population of harmful insects such as Asian Hornets.

### Background to the invention

The Asian hornet is currently growing quickly in terms of the numbers and the geographic distribution. Although in some regions, the Asian hornets are not considered as pests because there are many natural predators for these insects, in other regions, the natural predators are absent or limited in numbers, thus allowing the population of the Asian hornets to grow beyond allowable numbers. Therefore, their active eradication may be needed in some regions, while in others they may not need to be eradicated.

At the present time, when e.g. a hornet nest is located, an anaesthetic product is injected into the hornet nest and once the insects have been anesthetised, the nest is collected and destroyed by incineration. However, injecting the anaesthetic product into the nest is not without risk for the person doing the injection while it remains possible for a number of insects to escape the nest before being anesthetised and destroyed.

Insect traps are also well known and used in order to trap individual insects so that they can be killed. However, when using insect traps, not only the harmful insects are lured inside the trap, but also insects which are considered as unharmful and useful in nature. Typically, such insect traps will have a funnel shaped entrance allowing the insects to fly or crawl inside the trap and, due to the construction of the funnel, will be unable to escape again. The trapped insects, the harmful ones but also the trapped unharmful ones, will expire after a period of time, thus often leading to the unnecessary killing of non-targeted species.

Also insecticide delivery systems have been developed in an attempt to control flying insects with varying degrees of success. These insecticide delivery systems are often categorized as being either of the so called "quick kill" variety or of the "delayed kill" variety.

Quick kill systems use pesticides that kill shortly after contact or ingestion and are typically effective on individuals or very small groups of insects.

Pesticides which have a "delayed kill" action are most useful against social insects. However, if a "delayed kill" pesticide is ingested by wasps and bees, the active substance toxic to the insect will be carried back to the home colony where it will be shared by other members such as larvae, workers, and the queen. If sufficient toxicant is transported back into the home colony, it is possible to eradicate the entire colony.

In both types of insecticide delivery systems, these systems are not able to target only one specific insect such as the Azian hornet and the likelihood of killing useful insects is therefore high.

There is thus a need for an improved and smart insect trap which is able to trap insects and selectively kill the targeted insects while allowing untargeted insects to escape from the insect trap unharmed.

### Summary of the invention

It is the aim of the present invention to solve the problems highlighted above.

This aim is achieved by an insect trap incorporating smart technology which is able to trap and selectively kill or release trapped insects after identifying the type of insect.

According to a first aspect there is provided An insect trap for trapping and selectively killing or releasing insects, the insect trap comprising:
- a selective killing mechanism;
- an entrance connected to the selective killing mechanism, the entrance being configured to allow an insect to enter the selective killing mechanism;
- a luring substance dispenser configured to lure an insect through the entrance and inside the selective killing mechanism;
- identification means configured to identify a trapped insect inside the selective killing mechanism; and
characterized in that the selective killing mechanism comprising:
- an enclosure having a first opening and a second opening, the first opening being configured to connect the enclosure with the entrance and the second opening being configured to release a trapped insect from the enclosure;
- a moveable element moveably placed inside the enclosure, the moveable element having a containment space and being configured to allow a trapped insect to move from the entrance and via the first opening to the containment space when the containment space is aligned with the first opening in the enclosure, and to release the trapped insect from the containment space when the containment space is aligned with the second opening in the enclosure; and
- a shredding device positioned at least partly inside the enclosure, the shredding device being configured to cooperate with the moveable element to selectively kill an insect located inside the containment space based on the identification by the identification means.

In this way the insect trap will allow a trapped insect which is not the targeted insect to be effectively released while the captured and targeted insects will be killed without the possibility to affect other insects which are already trapped inside the insect trap. Additionally, the insects which are not targeted will not be harmed or contaminated while being trapped inside and released from the insect trap.

In this way the insect trap represents a significant advancement in pest control technology by combining automated luring, sophisticated species identification, and selective elimination or release mechanisms. It offers a humane and ecologically responsible solution to managing insect populations, specifically targeting and reducing the number of invasive and harmful species like the Asian Hornet, while preserving beneficial or non-threatening insects.

In a preferred embodiment, the the enclosure further comprises a third opening configured to allow access to the outer environment, the second opening being positioned clockwise in relation to the first opening and the third opening being positioned counter-clockwise in relation to the first opening, and wherein the shredding device being positioned clockwise from the first opening and positioned between the first opening and the second opening.

The selective killing mechanism is in direct contact with the entrance which holds the trapped insects and is configured to allow a trapped insect to enter the selective killing mechanism, more particular in a containment space which is available in a moveable element which is placed inside the enclosure. Once an insect is inside the containment space of the moveable element, the containment space of the moveable element can be re-aligned with the second or third opening. When the containment space is moved from the first opening towards the second opening, the containment space will pass via a shredding device which will kill the trapped insect positioned in the containment space. If the containment space is aligned with the second opening, the killed insect will be disposed to the surroundings via the second opening. However, if the containment space is moved from the first opening towards the third opening, the containment space will not pass via the shredding device and the trapped insect will be able to escape the insect trap unharmed when the containment space is aligned with the third opening.

In a preferred embodiment, the shredding device comprising multiple blades positioned inside the enclosure. Preferably, the multiple blades are connected directly or indirectly to each other and/or the outer surface of the enclosure. In a preferred embodiment, the multiple blades are stationary.

When using blades which are able to co-operate with the moving containment space, the trapped insect can be killed without the need to use pesticides which potentially harm other trapped insects which are not targeted. By connecting each one of the blade to the stationary outer surface of the enclosure, the blades are directly or indirectly connected with each other to form a robust and stationary setup.

Alternatively, the selective killing mechanism comprising an enclosure having a first opening in the outer surface of the enclosure, the first opening being configured to connect the enclosure with the entrance and a second opening in the outer surface of the enclosure, the second opening being configured to allow access to the outer environment of the insect trap. The selective killing mechanism further comprising a moveable element placed inside the enclosure, the moveable element having a containment space to allow a trapped insect to move from the entrance and via the first opening to the containment space when the containment space is aligned with the first opening in the enclosure and to release the trapped insect from the containment space to the outer environment when the containment space is aligned with the second opening in the enclosure. A movable shredding device is positioned inside the enclosure and is configured to move towards the containment space upon detection of an insect which needs to be killed.

By having multiple blades which are moveable in the direction of the containment space when a targeted insect is trapped inside the containment space, the moveable blades will be able to kill the trapped insect. Subsequently, the containment space can move from the first opening towards the second opening in the enclosure to release the killed insect to the outer environment, while the moveable blades are able to return to their original position away from the containment space. When the trapped insect is identified as an insect which is harmless or not a targeted insect species, the movable multiple blades will not be activated, and the containment space of the moveable element will proceed to move towards the second opening without the trapped insect being killed. Moving of the containment space, with or without the shredding device being activated, will have the effect that the insect will be removed from the containment space when the containment space is aligned with the second opening. If the insect is unharmed, the insect will be able to fly away through the second opening to escape from the insect trap into the environment. If the insect was however killed by the insect trap, it will drop out of the containment space when the containment space is aligned with the second opening. In order for the killed insect to be dropped from or slide out of the containment space, the second opening needs to be configured in such a manner that the containment space and second opening are able to co-operate with each other. It is preferred that the second opening is positioned on the underside of the insect trap and that the moveable element containing the enclosure is able to rotate to a point such that the enclosure is positioned above second opening.

In a preferred embodiment, the each one of the multiple blades is configured to be releasably connected to the outer surface of the enclosure. That way, the blades can be replaced after a specific time if the blades become worn out.

In a preferred embodiment, the containment space of the moveable element comprises slots, wherein each slot is configured to be aligned with one of the blades to allow passage of each one of the blades when the moveable element is being rotated inside the enclosure or alternatively when the shredding device is moved towards and through the containment space.

In a preferred embodiment, the luring substance dispenser is located upstream from the entrance, preferably located in the selective killing mechanism, and wherein the luring substance dispenser comprises:
- a reservoir for holding the luring substance prior to dispensing; and
- a dispensing opening for dispensing the luring substance from the reservoir into the interior of the insect trap.

When using a luring substance dispenser, the insects which need to be killed can be lured consistently over time inside the insect trap. Specific luring substance can be used in order to attract specific species of insects to limit the amount of harmless insects to be trapped inside the insect trap.

In a preferred embodiment, the luring substance dispenser dispenses the luring substance at regular intervals. By regularly dispensing the luring substance, a constant luring effect will be generated such that the insect trap can be optimally used. Alternatively, the dispensing of the luring substance can be regulated and timed such that the luring substance is only dispensed when it is known that the targeted insect is likely to fly by. E.g. when the targeted insect is known not to fly when it is raining, or when it is too hot or too cold, sensors can be installed which measure or register the specific weather conditions and send the information to a processing unit. The processing unit can then use the sensed data to dispense the luring substance at favorable timings or prevent dispensing of the luring substance at unfavorable timings.

In a preferred embodiment, the insect trap further comprises a driving unit, the driving unit being configured to drive at least the moveable element in a clockwise and/or counter-clockwise direction inside the enclosure, and wherein the driving unit is preferably an electric motor. Additionally, the driving unit being configured to drive the shredding device such that the shredding device is able to move towards and through the containment space. Furthermore, the driving unit being configured to provide power to the selective killing mechanism and to the identification means. Alternatively, a separate power supply may be provided to power the identification means.

In a preferred embodiment, the motor is powered by a battery, by one or more solar panels or by an electrical power supply.

In a preferred embodiment, the identification means comprising:
- a camera, the camera being positioned in the selective killing mechanism to detect and identify a trapped insect, and
- a processing unit, the processing unit being configured to:
   - receive input signals from the camera upon detection of the trapped insect,
   - process the input signals to determine if the detected insect is an insect which needs killing or releasing, and
   - send a control signal to the selective killing mechanism such that the selective killing mechanism is moveable from the receiving position wherein the containment space is aligned with the first opening into a killing or releasing position.

In a preferred embodiment, the processing unit is configured to use machine vision algorithms to identify the species of the trapped insect. Preferably, the targeted insect to be identified is an Asian Hornet.

In a preferred embodiment, the identification means is further configured to transmit captured data on an identified trapped insect to a central server, wherein preferably the transmitting of the data is via a mobile network connection, such as for example a LTE connection. In a preferred embodiment, the data to be transmitted are images and identification results. When transmitting the captured and/or recorded to a central server will allow the user of the insect trap to analyze the data captured by the identification means. For instance, it is possible on the basis of this data to identify how many insects were identified to be an Azian hornet, and how many were successfully killed. Additionally, it is possible to identify how many and what kind of insects were otherwise captured by the insect trap and successfully released into the outer environment. Using this data can allow mapping of the population of particular species in a specific area where the insect trap is located.

According to a further aspect, a method for operating an insect trap is provided, wherein the method comprising the steps:
- dispensing a luring substance to lure an insect through the entrance and inside selective killing mechanism,
- upon entering of an insect inside the insect trap, detecting and identifying by the identification means if the trapped insect is an insect which needs to be killed or released, and
- moving the selective killing mechanism in a first direction if the trapped insect is identified as an insect which needs to be killed or moving the selective killing mechanism in a second and opposite direction from the first direction if the trapped insect is identified as an insect which needs to be released.

When having a trapped insect inside the containment space of the moveable element, the identification means is able to scan and identify the type or species of insect trapped within the containment space. If it is determined that the insect is the targeted insect, e.g. an Asian Hornet, the insect will need to be killed. In order for the insect to be killed the moveable element of the selective killing mechanism will rotate in the direction of the shredding device and will move the containment space past the knifes of the shredding device. The knifes of the shredding device are able to pass through the rotating moveable element due to the slots foreseen in the containment space of the moveable element. The insect trapped inside the containment space will then be killed by the rotation of the moveable element past the shredding device. Once the containment space is passed the shredding device, it can continue to rotate towards the second opening of the enclosure and allow the ejection from the killed insect to the environment. If however it is determined that the trapped insect is not the targeted insect, the moveable element will rotate in the opposite direction, away from the shredding device and will continue to rotate till the containment space is aligned with the second opening, thus allowing the unharmed insect to escape from the insect trap.

Alternatively, it is possible for the shredding device of the selective killing mechanism to rotate in the direction of the containment space which holds the trapped insect instead of the containment space to rotate in the direction of the shredding device.

Therefore, if an insect is trapped inside the containment space of the moveable element, the identification means is able to scan and identify the type or species of insect trapped within the containment space. If it is determined that the insect is the targeted insect, e.g. an Asian Hornet, the insect will need to be killed. In order for the insect to be killed the shredding device will rotate in the direction of the containment space of the moveable element and will move the knifes of the shredding device past the containment space. The knifes of the shredding device are able to pass through slots foreseen in the containment space of the moveable element. The insect trapped inside the containment space will then be killed by the rotation of the shredding device through and past the containment space. Once the shredding device has transversed completely through the containment space, the movement of the shredding device can be reversed and the shredding device will again pas through the containment space and will be able to return to its home position. Simultaneously or subsequently, the moveable element will rotate in the direction of the second opening of the enclosure and will thus allow the removal of the killed insect from the containment space to the environment.

If however it is determined that the trapped insect is not the targeted insect, the shredding device will remain inactive and the moveable element will rotate in the direction away from the shredding device and towards the second opening until the containment space is aligned with the second opening, thus allowing the unharmed insect to escape from the insect trap.

In a preferred embodiment, the method further comprises the step of transmitting the detection and identification data collected by the identification means to a central server via a network connection.

In a preferred embodiment, the transmitting of the detection and identification data is via a LTE connection. In a preferred embodiment, the data to be transmitted are images and identification results. The camera captures images of each trapped insect, and the processing unit such as an embedded computer, employs machine vision technology to analyze these images and accurately identify the insect species based on their morphological characteristics. This identification process leverages advanced algorithms capable of distinguishing targeted insects such as Asian Hornets from other insects with high confidence. When transmitting the captured and/or recorded data and analysis to a central server, it will allow the user of the insect trap to analyze the data captured by the identification means. Preferably, the data includes detailed records of all captured insects, images, videos and identification results. Preferably, such information is to be used for monitoring insect populations, studying the distribution of specific species and/or improve pest control strategies.

### Brief description of the drawings

Figure 1 shows a 3D view of an insect trap according to an embodiment of the invention;
Figure 2 shows a side view of the insect trap as shown in figure 1;
Figure 3 shows the front view of the insect trap as shown in figures 1 and 2;
Figure 4 shows the cross view along line III-III as shown in figure 2, showing the inside of the insect trap;
Figures 5A to 5C each show a cross view along line A-A' as shown in figure 2, wherein in figure 5A a first embodiment of a selective killing mechanism is shown, in figure 5B an alternative embodiment of a selective killing mechanism is shown and in figure 5C a further alternative embodiment of a selective killing mechanism is shown;
Figure 6 shows a schematic representation of the insect trap as shown in figure 1; and
Figure 7 shows a flow chart of the method to operate the insect trap as shown in any of the other figures.

### Detailed description of invention

Before the present system and method of the invention are described, it is to be understood that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps. It will be appreciated that the terms "comprising", "comprises" and "comprised of' as used herein comprise the terms "consisting of", "consists" and "consists of".

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g*., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the present description of the invention, reference is made to the accompanying drawings that form a part hereof, and in which are shown by way of illustration only of specific embodiments in which the invention may be practiced. Parenthesized or emboldened reference numerals affixed to respective elements merely exemplify the elements by way of example, with which it is not intended to limit the respective elements. Unless otherwise indicated, all figures and drawings in this document are not to scale and are chosen for the purpose of illustrating different embodiments of the invention. In particular the dimensions of the various components are depicted in illustrative terms only, and no relationship between the dimensions of the various components should be inferred from the drawings, unless so indicated.

When referring to clockwise or counter-clockwise, it is clear that this is merely to refer to the example shown in the drawings and that alternative embodiments are possible.

It is to be understood that other embodiments may be utilised and structural or logical changes may be made without departing from the scope of the present invention. The following detailed description, therefore, is not to be taken in a limiting sense, and the scope of the present invention is defined by the appended claims.

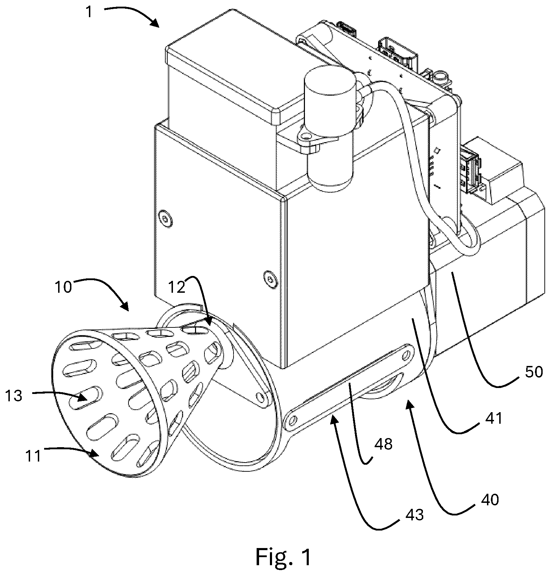

Figure 1 shows a 3D view of an insect trap 1 according to an embodiment of the invention. The insect trap 1 is configured to trap insects inside the insect trap and is able to selectively kill or release a trapped insect. The killed or released insect could for example be released to the outer environment of surroundings of the insect trap 1, or in any other suitable way such as for example a suitable container for holding trapped or killed insects. In order for an insect to enter the insect trap 1, an entrance 10 is provided. According to the embodiment shown, the entrance 10 has a funnel shape tapered towards a selective killing mechanism 40. This shape increases the chance of an insect of choice to progress towards the selective killing mechanism. As further shown, according to the embodiments shown, holes are provided in the funnel-shaped entrance 10 which are dimensioned to allow smaller insects then the insect of choice to egress from the entrance 10. The insect of choice could for example be Asian hornets, but it is clear that alternative embodiments are possible in which the entrance 10 has been dimensioned for other suitable insects of choice, which have to be killed in order to prevent or control their propagation. According to the embodiment shown, the entrance 10 is typically cone-shaped having a large opening 11 on one side, and a significantly smaller opening 12 on the other side. Alternatively or additionally, the entrance 10 can be equipped with flaps that allows insects to enter the selective killing mechanism 40, but will hinder or prevent the insects from exiting. According to the embodiment shown, the circumference of the cone-shaped entrance 10 is optionally foreseen with holes 13, allowing smaller insects which typically are not intended to be trapped inside the insect trap 1 to be able to escape the insect trap 1 through the holes 13 rather than to be trapped inside the insect trap.

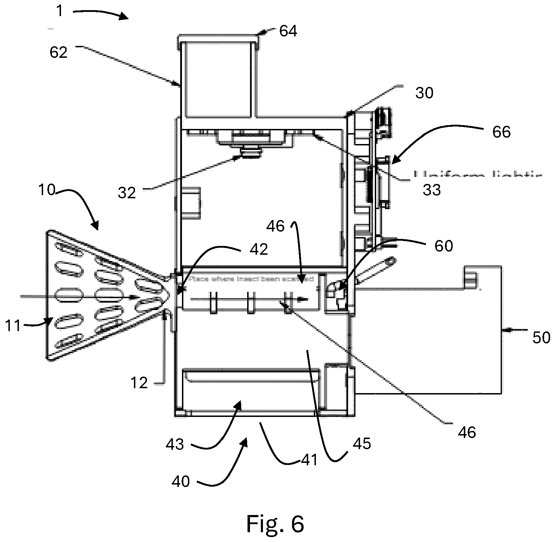

If a targeted insect, such as for example an Asian hornet, enters the entrance 10 via the opening 11 of the entrance 10, it will not be able to escape the entrance through the holes 13 since these holes are foreseen to be smaller than the body of the insect, thus making it impossible for the targeted insect to escape via such holes 13 in the entrance 10. Also, due to the cone-shade form of the entrance 10, which is tapered towards the smaller opening 12, the targeted insect, when proceeding towards the smaller opening 12, will get trapped ance it enters the selective killing mechanism 40 via the smaller opening 12 without the risk of exiting the entrance 10 via the holes 13.. In order to lure a targeted insect towards the smaller opening of the entrance 10, a luring substance dispenser 60 may be provided inside the selective killing mechanism 40. As for example shown in Figure 6, according to such an embodiment, the luring substance dispenser 60 is able to dispense, e.g. at regular intervals, a luring substance which is appealing to the targeted insect species. Alternatively or additionally, one or more sensors 70 may be provided which monitor external conditions such as temperature, humidity, wind, light, etc, since these conditions may affect the movement of the insect. If it is for example known that the targeted insect species typically only fly during the day, a sensor may detect if it is day or night and may prevent dispensing of the luring substance during the night time to save usage of the luring substance. It is clear that alternative embodiments are possible with respect to such a method of operation of the luring substance dispenser 60, in which preferably the dispenser 60 is operated intermittently and/or during predetermined time periods such that the amount of luring substance dispensed can be reduced in order to extend the service intervals required for replenishing the luring substance.

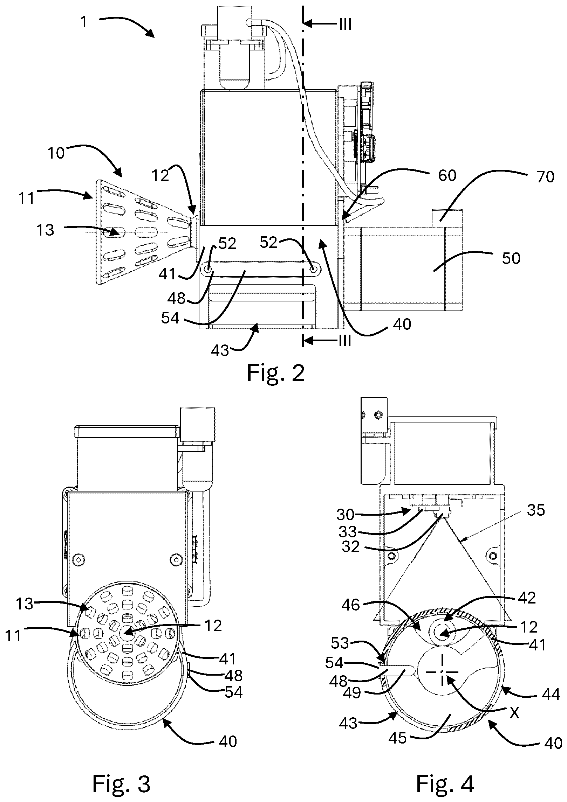

As shown, for example in Figure 3, which shows a cross-section along line III-III in Figure 1, the entrance 10 is, at its smaller opening 12 coupled to a first opening 42 of the selective killing mechanism 40. Protruding at least partly within an enclosure 41 of the selective killing mechanism 40, a shredding device 48 is provided to assist the selective killing mechanism 40 when a trapped insect needs to be killed. According to the embodiment shown, preferably on or near the bottom side of the enclosure 41, a second opening 43 is foreseen to allow release of a trapped insect from the enclosure 41 as will be explained in further detail below. Further, according to the embodiment shown, the selective killing mechanism 40 further comprises an identification means 30 configured to detect and identify a trapped insect inside the insect trap 1, preferably when the trapped insect is located inside selective killing mechanism 40, more particularly when the trapped insect is located inside the enclosure 41 after entering it via the first opening 42 of the selective killing mechanism 40. Although, according to the embodiment shown, the identification means 30 is positioned above the selective killing mechanism 40 40, it is also possible to position the identification means 30 in any other suitable position relative to the selective killing mechanism 40 which allows for detecting and identifying the trapped insect.. The identification means 30 preferably comprises an optical detector, such as for example a camera 32. According to the embodiment shown, the identification means 30 comprises an embedded computer system equipped with a high-resolution camera 32 positioned at or near the top of the selective killing mechanism 40, in other words directed towards the location of the trapped insect below the camera 32 or at any other convenient location where the camera 32 is able to scan a location holding the trapped insect in the selective killing mechanism 40. According to an embodiment, the camera captures one or more images of each trapped insect. These one or more images are inputted to a suitable computer system, for example an embedded computer, which employs machine vision technology to analyse these images and is configured to accurately identify the insect species based on for example their morphological characteristics, size, colour, .... This identification process comprises for example advanced algorithms capable of distinguishing targeted insect species such as Asian Hornets from other insects with a predetermined level of confidence.

According to the embodiment shown, on the side opposite from the entrance 10, a driving unit 50 such as an electrical motor 50 is placed to drive the selective killing mechanism 40 and/or to provide the identification means 30 with power such that the identification means 30 is able to detect and identify a trapped insect. Upon identification of the trapped insect as a targeted insect with a predetermined level of confidence, the identification means 30 will activate internal mechanisms of the insect trap 1 based on the classification result. If the trapped insect is confirmed to be a targeted insect, the selective killing mechanism 40 will be operated in such a way that the trapped insect is killed by means of the shredding device 48. Conversely, if the insect is identified as non-harmful, the selective killing mechanism 40 will be operated such that the trapped insect is guided towards an exit that facilitates its safe and unharmed release back into the environment, or in other words without encountering the shredding device 48.

Figure 2 shows a side view of the embodiment of the insect trap 1 as shown in figure 1. It is clear from figure 2 that part of the entrance 10 the small opening provides access to the selective killing mechanism 40. According to the embodiment shown, the holes 13 foreseen in the entrance 10 are preferably oval shaped and smaller in diameter than the small opening 12. It is clear that still further alternative embodiments are possible with other suitable sizes and or shapes of the holes 30 of the entrance 10. Although these holes 13 preferably still allow smaller untargeted insects to escape the insect trap, however the holes 13 will hinder or prevent the larger targeted insect species, such as for example the Asian hornet, to escape via these holes 13.

Although, according to some embodiments, the shredding device 48 may be fixedly connected to the enclosure 41, e.g. by rivets, ..., it is preferred that, according to the embodiment shown, the shredding device 48 is removably installed in such a way that the shredding device 48 at least partly protrudes within the enclosure 41. According to the embodiment shown, screws or bolts 52 are foreseen which securely and removably connect the shredding device 48, preferably comprising of multiple blades 49, through a slot 53 in the enclosure 41 such that the blades 49 of the shredding device 48 are positioned at least partly inside the enclosure 41 during normal operation, but can be removed from the enclosure 41 by loosening the screws or bolts 52. According to the embodiment shown, the multiple blades 49 are connected to a central bar 54 of the shredding device 48 and the screws 52 penetrate through the central bar 54 to removably connect the shredding device 48 with the enclosure 41. Such removal may be beneficial if maintenance is needed to the blades 49, e.g. when one or more blades has become blunt or is damaged. According to a preferred embodiment, when the blades 49 are removable from the central bar 54, each individual blade 49 can be replaced. It is however clear that alternative embodiments are possible, for example in which a plurality and/or all of the blades 49 are fixedly connected to the central bar 54, then the central 54 and blades 49 need to be replaced in its entirety. As is clear from the side view of figure 1, one or more sensors 70 are attached to a side of the selective killing mechanism 40. Alternatively one or more sensors 70 may be attached to different parts of the insect trap 1 such as inside and/or outside the selective killing mechanism 40, a driving unit 50 or even remote from the insect trap 1.

**Figure 3** shows a front view of the embodiment of the insect trap 1 as shown in Figures 1 and 2. As is clear from Figure 3, the large opening 11 of the entrance 10 is larger than the small opening 12 of the entrance 10, preferably at least two times larger, preferably at least four times larger. As further shown, it is clear that according to this embodiment, the enclosure 41 of the selective killing mechanism 40 is constructed as a tubular element which will allow a moveable element 45 of the selective killing mechanism 40 to rotate inside the tubular enclosure 41, preferably, as shown in close proximity to the enclosure 41. As shown, according to a preferred embodiment, the moveable element 45 approaches the enclosure 41, along at least a part of its circumference to within less than 10%, preferably less than 5% of its diameter.

**Figure 4** shows a cross section along line III-III of Figure 2. In Figure 4, a first embodiment of the selection mechanism 40 is shown. In the first embodiment of the selection mechanism, next to the first opening 42, two further openings are foreseen, the second opening 43 and a third opening 44. Further, the first opening 42 giving access from the entrance 10 to the interior of the selection mechanism 40 is visible, as well as the small opening 12 of the entrance 10. As shown, a moveable element 45 is placed inside the enclosure 41 and is able to rotate around a rotation axis X inside the enclosure 41 in a clockwise and in a counter-clockwise direction. According to the embodiment shown, the moveable element 45 is generally tubular in shape having a notch which forms a containment space 46. It is clear that, according to the embodiment shown, when the moveable element 45 is positioned in an angular position such that the containment space 46 is aligned with the first opening 42 of the enclosure 41, an insect will be able to move from the entrance 10 to the containment space 46 via the first opening 42. Once the trapped insect has entered the containment space 46, the identification means 30 will for example detect its presence and will take one or mre images of the trapped insect. According to an embodiment the detection by the identification means 30 can for example be done by a motion detection sensor 33, or any other suitable sensor that is configured to detect the presence of an insect in the containment space 46. The images can be taken by a camera 32, preferably a high-resolution camera. Advantageously, in order to save memory space and battery capacity, according to a preferred embodiment, the motion detection sensor 33 will first detect the presence of an insect inside the containment space 46 before the camera 32 is activated. However it is clear that alternative embodiments are possible in which the camera 32 is constantly taking images or videos of the interior of the enclosure 41. Figure 4 also schematically shows the range of detection 35 of the camera 32. Further, according to an optional embodiment, a grid 36 can be foreseen inside the identification means 30 to prevent a trapped insect from for example escaping out of the containment space 46 and into the interior space of the identification means 30. According to the embodiment shown, the camera 32 will capture one or more images of the trapped insect and provide these one or more images to a processing unit 34, such as an embedded computer. The processing unit 34 is configured to make use of machine vision algorithms to identify the species of the trapped insect. The identification process is aimed at analysing physical characteristics of the insects to determine if the trapped insect is a targeted insect such as the Asian hornet or another, harmless, species. Further, preferably, the processing unit 34 will log all data on all the detected insects, including the images taken and identification results, and is for example able to transmit this data to a central server over a network connection such as a suitable wired or wireless network connection, such as for example an mobile network connection for further analysis and monitoring. Preferably, at least at or near the containment space 46, the enclosure 41 is at least partly translucent such that the sensor and/or the camera 32 is able to detect and/or take one or more images of the trapped insect in the containment space 46. The enclosure 41 could for example comprise and/or consist of a suitable translucent plastic, such as for example Plexiglas, etc., glass, ....

According to the embodiment shown, the shredding device 48 is positioned through a slot 53 of the enclosure 41 and is located at least partly inside the interior of the enclosure 41. According to the embodiment shown in the orientation of Figure 4, the slot 53 is positioned between the first opening 42 and the second opening 43 in a clockwise direction, while the third opening 44 is positioned in a counter-clockwise direction from the first opening 42. It is however clear that alternative embodiments are possible in which the shredding device 46 is positioned in any other suitable position between a first opening 42 and a second opening 43.

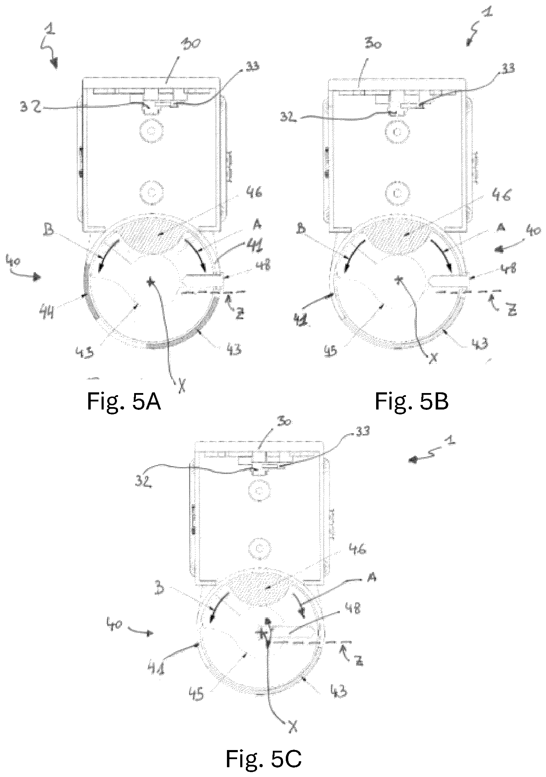

In **Figure 5A****,** a first embodiment of the selective killing mechanism 40 is shown. The enclosure 41 is foreseen with a first opening 42 giving access from the entrance 10 to the containment space 46 in the moveable element 45 when the containment space 46 is aligned with the first opening 42. A second opening 43 is foreseen in the enclosure 41 in a clockwise direction from the first opening 42 and the shredding device 48 is positioned between the first 42 and second 43 opening. Further, a third opening 44 is foreseen in the enclosure 41 in a counter-clockwise direction from the first opening 42.

As a starting point, the containment space 46 is aligned with the first opening 42. When an insect is present in the containment space 46, it is detected by a motion detection sensor 33, upon which the motion detection sensor 33 will send the detection signal to a processing unit 34 of the identification means 30 to activate the camera 32. The camera 32 will now take images and/or a video from the trapped insect and will send these images and/or video to the processing unit 34 which will now determine if the trapped insect is the targeted insect species, or if it is not. If the detected trapped insect is indeed the targeted insect species, the processing unit 34 will send a signal to the driving unit 50 such that the driving unit 50 will move the moveable element 45 in a clockwise direction A. By doing so, the containment space 46 with the trapped insect inside the containment space 46 will rotate away from the first opening 42 and towards the shredding device 48. Once the containment space 46 reaches the blades 49 of the shedding device 48, a continued rotation of the moveable element 45 will have the effect that the blades 49 will penetrate inside the containment space 46 via slots foreseen in the containment space 46 and will kill the trapped insect held inside the containment space 46. The moveable element 45 will now be able to continue rotation in de clockwise direction A until it reaches the second opening 43. Once the containment space 46 is aligned with the second opening 43, the killed insect will be able to drop or slide out of the containment space 46 and into the outer environment or surroundings of the insect trap 1. The moveable element 45 may be halted when the containment space 46 is aligned with the second opening 43 to allow sufficient time for the killed element to be removed by gravity out of the containment space 46. Additionally, it is possible to foresee a small amount of air or liquid to facilitate the removal of the killed insect. The moveable element 45 can now continue its rotation in a clockwise direction A until the containment space 46 is again aligned with the first opening 42. Alternatively, the moveable element 45 can rotate in the opposite counter-clockwise direction B after stopping of the moveable element 45.

However, when the detected trapped insect is not the targeted insect species, the processing unit 34 will send a signal to the driving unit 50 such that the driving unit 50 will move the moveable element 45 in a counter-clockwise direction B. By doing so, the containment space 46 with the trapped insect inside the containment space 46 will rotate away from the first opening 42 and towards the third opening 44. When the containment space 46 is aligned with the third opening 44, the moveable element 45 may be halted to allow the trapped insect sufficient time to escape from the containment space 46 into the outer environment. Additionally, the moveable element 45 may continue to rotate in the counter-clockwise direction B and align the containment space 46 with the second opening 43. If the trapped insect did not escape from the containment space 46 when aligned with the third opening 44, it may now escape since the containment space 46 is now aligned with the second opening 43 and again provides entrance to the outer environment. Although it is possible for the moveable element 45 to continue its rotation in the counter-clockwise direction B and again end up in its starting position where the containment space 46 is aligned with the first opening 42, it may be preferable to stop the counter-clockwise movement when the containment space 46 reaches the shredding device 48. If, in the unlikely event, the trapped insect did not yet escape from the containment space 46, it could be killed or injured by the blades 49 of the shredding device 48 due to the continued movement. Therefore, it is preferred that the moveable element 45 will not continue a rotation in the counter-clockwise direction beyond the line Z, but the direction of rotation will be reversed, such that the moveable element 45 will continue its rotation in a clockwise direction, moving from the second opening 43 via the third opening 44 again to the first opening 42. The trapped insect will thus have two additional moments where the containment space 46 is aligned with either the second opening 43 and the third opening 44 to allow the insect to escape from the containment space 46.

**Figure 5B** shows a second embodiment of the selective killing mechanism 40. The operation of the selective killing mechanism 40 is similar to the operation of the first embodiment. However, instead of having a second 43 and third 44 opening in the enclosure 41, one the second opening 43 is foreseen. In the first embodiment as shown in figure 5A, the second 43 and third 44 opening were between 20° and 60° of the total circumferential of the enclosure 41. In figure 5B, the second opening 43 may take up more of the circumferential of the enclosure 41, e.g. between 40° and 180°.

As a starting point, the containment space 46 is aligned with the first opening 42. If the identification means 30 determines that the trapped insect present in the containment space 46 is a targeted insect, the moveable element 45 will be operated to move in the clockwise direction A, such that the containment space 46 will pass the blades 49 of the shredding device 48 and after killing the targeted insect, will align the containment space 46 with the second opening 43. Once aligned, the moveable element 45 can be brought to a halt to allow the killed insect to be disposed out of the containment space 46, and/or it may continue its rotation in the clockwise direction A towards its original position where the containment space 46 is again aligned with the first opening 42. However, it is likewise possible for the moveable element 45 to rotate in the counter-clockwise direction B after the killed insect is disposed from the containment space 46. If the identification means 30 however determines that the trapped insect is not a targeted insect, the moveable element 45 will be operated to move in the counter-clockwise direction B, such that the containment space 46 will be aligned with the second opening 43 without passing the shredding device 48. Once aligned, the moveable element 45 can be brought to a halt to allow the trapped insect to escape from the containment space 46, and/or the moveable element 45 may continue its rotation in the counter-clockwise direction B towards its original position where the containment space 46 is again aligned with the first opening 42. Although the continued rotation in the counter-clockwise direction B is possible, it is however preferred to stop the counter-clockwise rotation when the containment space 46 reaches the shredding device 48 to prevent a trapped insect which remains in the containment space 46 from being unintentionally killed. Therefore, once the containment space 46 reaches the line Z, the moveable element 45 may be brought to a halt and the rotation direction reversed in the clockwise direction A to allow sufficient time for the trapped insect to escape via the second opening 43 from the enclosure 41 of the selective killing mechanism 40.

In **Figure 5C****,** a third embodiment of the selective killing mechanism 40 is shown. Similar to the selective killing mechanism 40 as shown in figure 5B, the enclosure 41 of the third embodiment is foreseen with a first opening 42 which allows an insect to move from the entrance 10 to the containment space 46 of the moveable element 45, and a second opening 43 which allows the insect to escape or be disposed out of the containment space 46.

In the third embodiment, the shredding device 48 is not stationary, but instead is rotatable from an inactive position to an active killing position. Therefore, the blades of the shredding device 48 are rotatable around a rotation axis X and the shredding device 48 can be brought into motion by the driving unit 50.

As a starting point, the containment space 46 is aligned with the first opening 42. When an insect enters the containment space 46 from the entrance 10 via the first opening 42, the identification means 30 will be able to determine if the detected insect is a targeted insect or not. If the trapped insect is a targeted insect, the processing unit 34 will send a signal to the driving unit 50 such that the driving unit 50 will move the shredding device 48 in a counter-clockwise direction B and towards the containment space 46. Once the blades 49 of the shedding device 48 reach containment space 46, a continued rotation of the shredding device 48 will have the effect that the blades 49 will penetrate inside the containment space 46 via slots foreseen in the containment space 46 and will kill the trapped insect held inside the containment space 46. When the blades 49 of the shredding device 48 have gone completely through the containment space 46 and thus effectively killed the targeted insect, the rotation of the shredding device 48 will come to a halt and the rotation direction of the shredding device is revered such that the shredding device 48 will now rotate in the clockwise direction A towards its original inactive position. Subsequent to or simultaneously with the rotation of the shredding device 48 in the clockwise direction A, the moveable element 45 can start to rotate in the counter-clockwise direction B towards the second opening 43. Once the containment space 46 is aligned with the second opening 43, the killed insect will be able to drop or slide out of the containment space 46 and into the outer environment or surroundings of the insect trap 1. The moveable element 45 may be halted when the containment space 46 is aligned with the second opening 43 to allow sufficient time for the killed element to be removed by gravity out of the containment space 46. Additionally, it is possible to foresee a small amount of air or liquid to facilitate the removal of the killed insect. The moveable element 45 can now continue its rotation in the counter-clockwise direction B until the containment space 46 is again aligned with the first opening 42, thus passing along the shredding device 48 which is positioned in its inoperative position. Alternatively, the moveable element 45 can rotate in the opposite clockwise direction A after stopping of the moveable element 45.

If the identification means 30 however determines that the trapped insect is not a targeted insect, the moveable element 45 will be operated to move in the counter-clockwise direction B, such that the containment space 46 will be aligned with the second opening 43 without the activation of the shredding device 48. Once the containment space 46 is aligned with the third opening, the moveable element 45 can be brought to a halt to allow the trapped insect to escape from the containment space 46, and/or the moveable element 45 may continue its rotation in the counter-clockwise direction B towards its original position where the containment space 46 is again aligned with the first opening 42. Although the continued rotation in the counter-clockwise direction B is possible, it is however preferred to stop the counter-clockwise rotation when the containment space 46 reaches the inactive position of the shredding device 48 to prevent a trapped insect which remains in the containment space 46 from being unintentionally killed. Therefore, once the containment space 46 reaches the line Z, the moveable element 45 may be brought to a halt and the rotation direction reversed in the clockwise direction A to allow sufficient time for the trapped insect to escape via the second opening 43 from the enclosure 41 of the selective killing mechanism 40.

**Figure 6** shows a schematic representation of the insect trap as shown in figure 1 having a selective killing mechanism 40 according to the first or second embodiment.

An insect is able to enter the insect trap 1 via the entrance 10. The entrance is preferably a one-way entrance 10 which gives access to the selective killing mechanism 40, while typically hindering or preventing a trapped insect to exit the selective killing mechanism 40 via the entrance 10. The entrance 10 is cone-shaped having a large opening 11 on one side, and a significantly smaller opening 12 on the other side. The large opening 11 will allow easy access inside the entrance 10 and the cone-shape will guide the insect towards the selective killing mechanism 40. The smaller opening 12 is positioned next to, against or adjacent to the selective killing mechanism 40 which will prevent the trapped insect from escaping selective killing mechanism 40 via the entrance 10. A luring substance dispenser 60 is provided inside the selective killing mechanism 40 to lure the targeted insects inside selective killing mechanism 40 of the insect trap 1. The selective killing mechanism 40 is connected to the entrance 10 via a first opening 42 through which the trapped insect can move from the entrance 10 to the containment space 46 of the selective killing mechanism 40. In order to motivate the trapped insects to move from the entrance 10 to further into the containment space 46, it is clear that the luring substance dispenser 60 is preferably provided inside the selective killing mechanism 40 at or near the downstream end of the containment space 46. Once a trapped insect is present in the containment space 46, the identification means 30 will be able to detect and/or identify the trapped insect and determine if the trapped insect is a targeted insect such as an Asian hornet, or not.

If the identification means 30 determines that the trapped insect is a targeted insect, the processing unit 34 of the identification means 30 will instruct the driving unit 50 to rotate the moveable element 45 of the selective killing mechanism 40 in a direction towards the shredding device 48 in order to kill the insect which is now trapped inside the containment space 46. Due to the continued rotation of the moveable element 45, the containment space 46 will be aligned with the second opening 43 and the killed insect will be able to be dispensed from the containment space 46 and into the outer environment of the insect trap 1. The moveable element 45 will continue to rotate until the containment space 46 is again aligned with the first opening 42, such that the next trapped insect can enter the containment space 46.

If the identification means 30 determines that the trapped insect is however not a targeted insect, the processing unit 34 of the identification means 30 will instruct the driving unit 50 to rotate the moveable element 45 of the selective killing mechanism 40 in a direction away from the shredding device 48 in order to prevent killing of the insect which is now trapped inside the containment space 46. Due to the rotation of the moveable element 45, the containment space 46 will be aligned with the second opening 43 and the trapped insect will be able to escape unharmed from the containment space 46 and into the outer environment of the insect trap 1. The moveable element 45 will continue to rotate until the containment space 46 is again aligned with the first opening 42, such that the next trapped insect can enter the containment space 46.

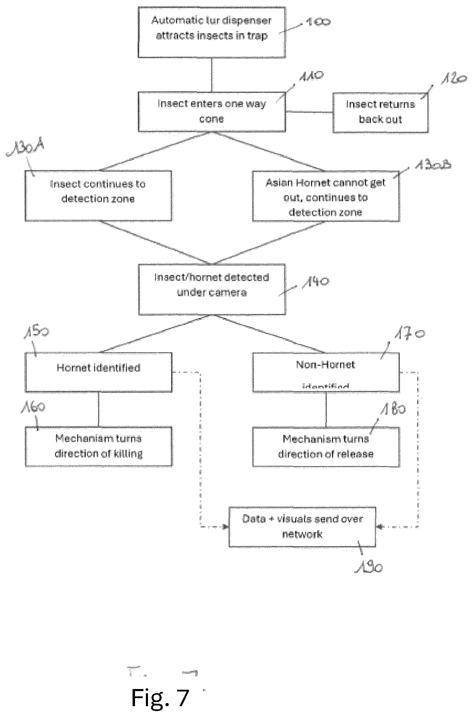

**Figure 7** shows a flow chart of the method to operate the insect trap 1 as shown in any of the figures 1 to 6.

In a first step 100, the luring substance dispenser 60 will dispense a luring substance to attract insects inside the insect trap 1. As for example shown in Figure 6, the substance dispenser 60 could for example comprise a suitable reservoir 62 with a removable cap 64 for allowing refilling, from which the luring substance is controllably dispensed by means of a suitable conduit towards the downstream end of the containment space 46, for example by means of a suitable pump and/or valve controlled by a suitable controller 66.

In step 110, one or more insects will enter inside the insect trap 1 via the entrance 10, preferably via the one-way entrance 10. Since holes 13 are foreseen in the entrance 10, insects which are small enough to pass through the holes 13 may return back out of the insect trap 1 via the holes 13 in step 120.

In step 130A, if the insects however remain inside the entrance 10, the trapped insect will continue to move to the detection zone inside the selective killing mechanism 40.

If however the trapped insect is a targeted insect such as the Asian hornet, the targeted insect will not be able to escape out of the insect trap and will in step 130B continue to move to the detection zone.

In step 140, the insect is detected by the identification means 30.

If the trapped insect is a targeted insect, the targeted insect is identified in step 150.

In step 160, the selective killing mechanism 40 will be operated to kill the targeted insect. Preferably, the selective killing mechanism 40 will rotate in the direction of the shredding device 48 such that the targeted insect is killed. Alternatively, the shredding device 48 will rotate in the direction of the trapped and targeted insect to kill the trapped insect.

If the trapped insect is not a targeted insect, the untargeted insect is identified in step 170.

In step 180, the selective killing mechanism 40 will be operated to release the targeted insect. Preferably, the selective killing mechanism 40 will rotate in the direction away from the shredding device such that the untargeted insect remains unharmed and is able to be released from the insect trap 1.

Optionally, in step 190, the captured data and/or visuals are sent to an external server via a network for further analysis thereof. Therefore, the embedded computer system 66 is connected to the internet via an LTE module or any other suitable communication module, preferablyenabling real-time data transmission to a central server. This data includes detailed records of all captured insects, images, and identification results. Such information can be used for monitoring insect populations, studying the distribution of pest species, and improving pest control strategies.

Therefore, a method for operating an insect trap 1 is foreseen, wherein the method comprising the steps:
- dispensing a luring substance to lure an insect through the entrance 10 and inside the selective killing mechanism 40,
- upon entering of an insect inside the insect trap 1, detecting and identifying by the identification means 30 if the trapped insect is an insect which needs to be killed or released,
- moving the selective killing mechanism 40 in a first direction if the trapped insect is identified as an insect which needs to be killed or moving the selective killing mechanism 40 in a second and opposite direction from the first direction if the trapped insect is identified as an insect which needs to be released, and
- optionally transmitting the detection and identification data collected by the identification means 30 to a central server via a network connection.

Not all the details described above are required in every embodiment according to the invention. It is clear that still further alternatives and/or combinations are possible without departing from the scope of protection as defined in the claims.

## Claims

1. An insect trap (1) for trapping and selectively killing or releasing insects, the insect trap comprising:
- a selective killing mechanism (40);
- an entrance (10) connected to the selective killing mechanism (40), the entrance (10) being configured to allow an insect to enter the selective killing mechanism (40);
- a luring substance dispenser (60, 60') configured to lure an insect through the entrance (10) and inside the selective killing mechanism (40);
- identification means (30) configured to identify a trapped insect inside the selective killing mechanism (40); and
**characterized in that** the selective killing mechanism (40) comprising:
- an enclosure (41) having a first opening (42) and a second opening (43), the first opening (42) being configured to connect the enclosure (41) with the entrance (10) and the second opening (43) being configured to release a trapped insect from the enclosure (41);
- a moveable element (45) moveably placed inside the enclosure (41), the moveable element (45) having a containment space (46) and being configured to allow a trapped insect to move from the entrance (10) and via the first opening (42) to the containment space (46) when the containment space (46) is aligned with the first opening (42) in the enclosure (41), and to release the trapped insect from the containment space (46) when the containment space (46) is aligned with the second opening (43) in the enclosure (41); and
- a shredding device (48) positioned at least partly inside the enclosure (41), the shredding device (48) being configured to cooperate with the moveable element (45) to selectively kill an insect located inside the containment space (46) based on the identification by the identification means (30).

2. An insect trap (1) according to claim 1, wherein the enclosure (41) further comprises a third opening (44) configured to allow access to the outer environment, the second opening (43) being positioned clockwise in relation to the first opening (42) and the third opening (44) being positioned counter-clockwise in relation to the first opening (42), and wherein the shredding device (48) being positioned clockwise from the first opening (42) and positioned between the first opening (42) and the second opening (43).

3. An insect trap (1) according to claims 1 or 2, wherein the shredding device (48) comprising multiple blades (49) positioned inside the enclosure (41).

4. An insect trap (1) according to claim 3, wherein the multiple blades (49) are connected directly or indirectly to each other and/or the outer surface of the enclosure (41).

5. An insect trap (1) according to claim 3 or 4, wherein each one of the multiple blades (49) is configured to be releasably connected to the outer surface of the enclosure (41).

6. An insect trap (1) according to any one of the claims 3 to 5, wherein the containment space (46) of the moveable element (45) comprises slots, and wherein each slot is configured to be aligned with one of the blades (49) to allow passage of each one of the blades (49) when the moveable element (45) is being rotated inside the enclosure (41).

7. An insect trap (1) according to any one of the preceding claims, wherein the luring substance dispenser (60) is located upstream from the entrance (10), preferably located in the selective killing mechanism (40), and wherein the luring substance dispenser (60) comprises:
- a reservoir 62 for holding the luring substance prior to dispensing; and
- a dispensing opening for dispensing the luring substance from the reservoir into the interior of the insect trap (1).

8. An insect trap (1) according to claim 7, wherein the luring substance dispenser (60) dispenses the luring substance at regular intervals.

9. An insect trap (1) according to any one of the preceding claims, wherein the insect trap (1) further comprises a driving unit (50), the driving unit (50) being configured to drive at least the moveable element (45) in a clockwise and/or counter-clockwise direction inside the enclosure (41), and wherein the driving unit (50) is preferably an electric motor.

10. An insect trap (1) according to claim 9, wherein the driving unit (50) is powered by a battery, by one or more solar panels and/or by an electrical power supply.

11. An insect trap (1) according to any one of the preceding claims, wherein the identification means (30) comprising:
- a camera (32), the camera (32) being positioned in the selective killing mechanism (40) to detect and identify a trapped insect, and
- a processing unit (34), the processing unit (34) being configured to:
• receive input signals from the camera (32) upon detection of the trapped insect,
• process the input signals to determine if the detected insect is an insect which needs killing or releasing, and
• send a control signal to the selective killing mechanism (40) such that the selective killing mechanism (40) is moveable from the receiving position wherein the containment space (46) is aligned with the first opening (42) into a killing or releasing position.

12. An insect trap (1) according to claim 11, wherein the processing unit (34) is configured to use machine vision algorithms to identify the species of the trapped insect, preferably an Asian Hornet.

13. An insect trap (1) according to any one of the preceding claims, wherein the identification means (30) is further configured to transmit data on an identified trapped insect to a central server, wherein preferably the transmitting of the data is via a mobile network connection; and/or wherein the data to be transmitted are images and/or identification results.

14. A method for operating an insect trap (1) according to any one of the preceding claims, **characterized in that** the method comprising the steps:
- dispensing a luring substance to lure an insect through the entrance (10) and inside the selective killing mechanism (40),
- upon entering of an insect inside the insect trap (1), detecting and identifying by the identification means (30) if the trapped insect is an insect which needs to be killed or released, and
- moving the selective killing mechanism (40) in a first direction if the trapped insect is identified as an insect which needs to be killed or moving the selective killing mechanism (40) in a second and opposite direction from the first direction if the trapped insect is identified as an insect which needs to be released.

15. A method for operating an insect trap (1) according to claim 14, wherein the method further comprises the step of transmitting the detection and identification data collected by the identification means (30) to a central server via a network connection.
